# EUROPÄISCHE PATENTSCHRIFT

(11) **EP 1 739 952 B1**
(45) Veröffentlichungstag und Bekanntmachung des Hinweises auf die Patenterteilung: **09.04.2008**
(21) Anmeldenummer: 05106015.0
(22) Anmeldetag: 01.07.2005
(51) Int. Cl.: H04N 1/32, G06F 17/30, G06F 21/00

(54) **URL-Wasserzeichen als Filter für Onlineverzeichnisse**
URL watermark as filter for on-line directories
URL filigrane utilisé comme filtre pour répertoires en ligne

(43) Veröffentlichungstag der Anmeldung: 03.01.2007
(73) Patentinhaber: Fraunhofer-Gesellschaft zur Förderung der angewandten Forschung e.V., 80686 München (DE)
(72) Erfinder: Steinebach, Martin, 64859, Eppertshausen (DE); Zmudzinski, Sascha, 60316, Frankfurt (DE); Liu, Huajian, 64283, Darmstadt (DE)
(74) Vertreter: Hilleringmann, Jochen

(56) Entgegenhaltungen:
- US-A- 5 745 900
- US-A1- 2001 000 359
- US-A1- 2001 021 978
- US-A1- 2002 029 253

## Beschreibung

### Technisches Anwendungsgebiet

Die Erfindung betrifft das Filtern von Urheberrechtsverletzungen aus Referenzlisten von Internetsuchmaschinen und insbesondere ein Verfahren zur Erstellung eines Onlineverzeichnisses von auf Internet-Seiten zum Herunterladen verfügbaren Mediendaten, insbesondere Bildern und/oder zum Ausgeben von Mediendaten durch eine Internet-Suchmaschine, wie aus US-A-5,745,900 bekannt.

### Stand der Technik, Nachteile der Technik

Derzeit werden durch Suchmaschinen Bilder und andere Medien automatisch referenziert, wenn sie auf Internetseiten gefunden werden. Diese Suche geschieht unabhängig von der Urheberrechtssituation. Es werden also auch illegale Kopien referenziert. Wird von den Rechteinhabern eine Urheberrechtsverletzung erkannt, kann diese bei den Betreibern der Suchmaschine gemeldet werden, die entsprechenden Einträge werden dann gelöscht.

Durch digitale Wasserzeichen und Vergleichsalgorithmen können die Rechteinhaber effizient nach Urheberrechtsverstößen im Internet suchen, die Weiterleitung der gefundenen Stellen ist aber verhältnismäßig aufwändig und zeitraubend.

### Mit der Erfindung gelöste Aufgabe

Internet-Suchmaschinen wie z. B. Google finden (leider) auch illegal verwendete Bilder und andere Medien. Zwar kann der Rechteinhaber über die Suchmaschinen seinerseits auch nach illegalen Kopien suchen, aber auch alle potentiellen Konsumenten illegaler Kopien finden schnell Material, In letzter Zeit wurden daher bereits Suchmaschinenbetreiber von Rechteinhabern mit der Begründung belangt, sich mit der Referenzierung auf Kopien von illegal kopierten Mediendaten angeblich der Beihilfe zur Verbreitung illegaler Kopien schuldig gemacht zu haben. Es muss also ermöglicht werden, illegale und legale Medien im Internet zu unterscheiden. Würde jedoch ein Mechanismus vorausgesetzt, der zu einem Medium Informationen bereitstellt und die Besitzverhältnisse klärt, so würden Privatanwender, die diesen Mechanismus nicht einsetzen, nicht mehr von Suchmaschinen gefunden werden. Dies widerspricht den Interessen der Suchmaschinen. Es muss also eine Lösung gefunden werden, welche nicht restriktiv bezüglich von Kopien agiert, welche keine Information zu den Besitzverhältnissen beinhalten. Im Fall des Vorhandenseins entsprechender Informationen muss aber überprüft werden können, ob eine gefundene Kopie im Internet legal ist.

### Grundzüge des Lösungsweges

Die Erfindung schafft ein Verfahren zur Erstellung eines Onlineverzeichnisses von auf Internet-Seiten zum Herunterladen verfügbaren Mediendaten, insbesondere Bildern und/oder zum Ausgeben von Mediendaten durch eine Internet-Suchmaschine, bei dem
- die Mediendaten mit einem Wasserzeichen kodiert sind, das kennzeichnend für die Internetseite ist, auf der die Mediendaten mit Zustimmung des Rechteinhabers der Mediendaten verfügbar sind, und
- in das Onlineverzeichnis nur dann ein Verweis auf die Mediendaten aufgenommen wird und/oder auf eine Suchanfrage eines Internet-Benutzers hin von der Suchmaschine nur dann ein Verweis auf die Mediendaten ausgegeben wird, wenn das aus den Mediendaten dekodierte Wasserzeichen für die Internet-Seite kennzeichnend ist, auf der die Mediendaten, auf welche in dem Onlineverzeichnis verwiesen werden soll und/oder auf welche bei der Suchanfrage verwiesen wird, verfügbar sind, wobei das Wasserzeichen die Internet-Adresse, der Domain-Name, die URL oder dergleichen Identifikation der Internet-Seite ist.

Ein Rechteinhaber stellt digitale Medien (z. B. Bilder) zum Download zur Verfugung. Die komplette URL (Unique Resource Location) oder der Domain-Name wird als Wasserzeichen in das Medium durch den Rechteinhaber eingebettet. Wird die Seite durch eine Internet-Suchmaschine wie z. B. Google erfasst, so kann anhand des Wasserzeichens erkannt werden, ob ein Bild sich an seiner ursprünglichen Stelle oder zumindest der korrekten Domain befindet. Ist dies nicht der Fall, wird die Internet-Suchmaschine das Bild nicht referenzieren. Demnach kann ein Pirat zwar ein Bild von der Seite des Rechteinhabers kopieren und z.B. bei sich platzieren; durch das Wasserzeichen wird seine Kopie aber nicht referenziert. Bei einer entsprechenden Suchanfrage eines Internet-Benutzers wurde also die Suchmaschine nicht auf die Seite des Piraten verweisen. Das kommerzielle Interesse eines potentiellen Piraten wird dadurch entscheidend reduziert, so dass er kein Interesse mehr haben wird, z. B. vom Rechteinhaber heruntergeladene Mediendaten auf seiner Homepage zu verwenden.

In dem Fall, dass die Mediendaten nicht mit einem Wasserzeichen kodiert sind, kann die Suchmaschine ganz normal auf die jeweilige Internetseite referenzieren, um z.B. Privatnutzer des Internets bezüglich ihrer Referenzierung in den Onlineverzeichnissen der Suchmaschinenbetreiber nicht auszugrenzen.

Um den Aufwand für die Suchmaschine gering zu halten, kann diese auf Kundeninteresse reagieren: Statt alle Bilder zu analysieren, werden nur die gepruft, auf die oft durch Suchanfragen zugegriffen wird. Ist eines der beliebten Bilder illegal, wird es aus der Liste der Referenzen entfernt. Ein Bild einer Privatperson auf einer eigenen Webpage, das kaum beachtet wird, würde so nicht nach einem Wasserzeichen durchsucht und keinen Aufwand verursachen

### Verbesserungen und Vorteile gegenüber dem Stand der Technik

Durch den Einsatz der URL oder dergleichen Identifikation des Rechteinhabers als Wasserzeichen in Verbindung mit einer Prüfung bei der Internet-Suchmaschine ergeben sich zahlreiche Vorteile.

Der Rechteinhaber muss keine DRM- (Digital Right Management-) Systeme einsetzen, die aktive Softwarekomponenten auf seiner Webseite und eventuell sogar bei seinen Kunden bzw. Besuchern erzwingen. Die digitalen Wasserzeichen sind ein rein passiver Mechanismus, der keinerlei Einfluss auf die übrige Webarchitektur des Rechteinhabers hat. Der Rechteinhaber kann, wenn er nur seinen Domainnamen einbettet, sein Bildmaterial frei auf der Webseite bewegen, ohne Sicherheitsregeln zu ändern. Er kann weiterhin sogar Änderungen am Material vornehmen, solange diese nicht zu einer Zerstörung des Wasserzeichens führen.

Die Suchmaschine kann effizient zwischen autorisierten und gestohlenen Medien unterscheiden, ohne dabei mit den Rechteinhabern kommunizieren zu müssen. Besonders zweckmäßig ist es, wenn nur markierte aber nicht korrekt platzierte Medien durch den Filter nicht referenziert werden. Solche Medien entstehen nur durch ein illegales Kopieren von Medien eines Rechteinhabers, der das Wasserzeichenverfahren einsetzt. Der private Anwender kann folglich weiterhin seine Medien in das Internet stellen und wird referenziert, allerdings kann er ohne einen eigenen Zugriff auf das Wasserzeichenverfahren selbst keine Piraterie seines Materials verhindern. Der potentielle Pirat hat keine Angriffspunkte auf das System, außer die eingebetteten Wasserzeichen zu zerstören und somit die Qualität der Medien zu beeinträchtigen.

Um den Aufwand bei der Suchmaschine niedrig zu halten, kann eine Untersuchung von Bildern bezüglich von Wasserzeichen auch erst dann durchgeführt werden, wenn häufig Suchanfragen auf diese Bilder zutreffen. So wird effizient ein massenhafter Missbrauch der Bilder verhindert, bei unbedeutenden Bildern entsteht hingegen kein Suchaufwand.

### Ausführungsbeispiel

Anhand einer graphischen Darstellung wird nachfolgend das Einbetten eines Bildwasserzeichens in Promotion-Material einer Webseite (als Beispiel: www.bilder.de) eines Rechteinhabers und das Auslesen des Wasserzeichens in einer Suchmaschine beschrieben.
Der Rechteinhaber (Content Provider) stellt Material zur Verfügung, welches von der Suchmaschine (Search Engine) gefunden wird. Da eingebettete und als Wasserzeichen ausgelesene URL übereinstimmen, wird das Material referenziert. Kopiert ein Pirat das Material, so erkennt die Suchmaschine eine Diskrepanz zwischen aktueller und eingebetteter URL und das Material wird nicht referenziert.
1. Der Rechteinhaber und die Suchmaschine einigen sich auf ein gemeinsames Wasserzeichenverfahren und einen geheimen Wasserzeichenschltissel.
2. Als Wasserzeichenverfahren eignet sich jedes bekannte Bildwasserzeichenverfahren, welches zum einen zumindest einfache Manipulationen am Bild, wie z. B. eine Transkodierung von Bitmap nach JPEG, übersteht. Weiterhin muss das Verfahren ausreichend Informationen einbetten können, um z. B. die Zeichenkette www.bilder.de in dem Bild einzubringen.
3. Der Rechteinhaber bettet die Information www.bilder.de als Wasserzeichen in die kostenlosen Bilder ein, die er auf seine Webseite stellt.
4. Die Suchmaschine durchsucht regelmäßig das Internet nach neuen Webseiten. Dabei stößt sie auf die Seite des Rechteinhabers und lädt die dort gespeicherten Bilder herunter. Sie durchsucht die Bilder nach einem Wasserzeichen, findet www.bilder.de und vergleicht dieses Wasserzeichen mit der Adresse, von der sie die Bilder geladen hat. Diese stimmen überein, die Bilder werden also in die Sammlung der Suchmaschine aufgenommen und für Suchanfragen gespeichert.
5. Ein Pirat kopiert nun die Bilder von www.bilder.de auf seine Webseite, z.B. www.piratenbilder.net. Dies kann er ohne Probleme tun, da die Bilder auf www.bilder.de nicht gegen Kopieren geschützt sind, da sie als Promotionsmaterial allen Nutzern zur freien privaten Verfugung stehen sollen.
6. Die Suchmaschine findet nun die Bilder auf www.piratenbilder.net und liest erneut das Wasserzeichen aus. Nun findet sie das Wasserzeichen www.bilder.de, welches nicht mit der Adresse übereinstimmt, von der sie die Bilder aktuell geladen hat. Die Bilder werden als Kopie erkannt und nicht in die Suchmaschinen interne Datenbank übernommen.

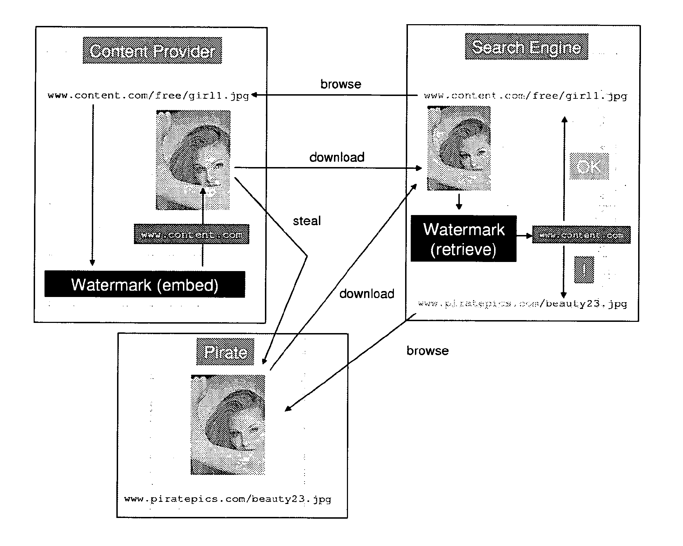

## Patentansprüche

1. Verfahren zur Erstellung eines Onlineverzeichnisses von auf Internet-Seiten zum Herunterladen verfügbaren Mediendaten und/oder zum Ausgeben von Mediendaten durch eine Internet-Suchmaschine,
**dadurch gekennzeichnet, dass**
- die Mediendaten mit einem Wasserzeichen kodiert sind, das kennzeichnend für die Internetseite ist, auf der die Mediendaten mit Zustimmung des Rechteinhabers der Mediendaten verfügbar sind, und
- in das Onlineverzeichnis nur dann ein Verweis auf die Mediendaten aufgenommen wird und/oder auf eine Suchanfrage eines Internet-Benutzers hin von der Suchmaschine nur dann ein Verweis auf die Mediendaten ausgegeben wird, wenn das aus den Mediendaten dekodierte Wasserzeichen für die Internet-Seite kennzeichnend ist, auf der die Mediendaten, auf welche in dem Onlineverzeichnis verwiesen werden soll und/oder auf welche bei der Suchanfrage verwiesen wird, verfügbar sind.

2. Verfahren nach Anspruch 1, **dadurch gekennzeichnet, dass** das Wasserzeichen die Internet-Adresse, der Domain-Name, die URL oder dergleichen Identifikation der Internet-Seite ist.

3. Verfahren nach Anspruch 1 oder 2, **dadurch gekennzeichnet, dass** es sich bei den Mediendaten um Bilder handelt.

## Claims

1. A method for establishing an online directory of media data available on internet pages for download, and/or for outputting media data by an internet search engine,
**characterized in that**
- the media data have been coded by a watermark which is characteristic of the internet page on which the media data are available with the consent of the legal holder of the media data, and
- a reference to the media data will be included in the online directory and/or, in response to a search request of by an internet user, a reference to the media data will be output by the search engine, only under the condition that the watermark decoded from the media data is characteristic of the internet page that makes available the media data to which reference shall be made in the online directory and/or is made in response to the search request.

2. The method according to claim 1, **characterized in that** the watermark is the internet address, the domain name, the URL or the like identification of the internet page.

3. The method according to claim 1 or 2, **characterized in that** the media data are images.

## Revendications

1. Méthode de constitution d'un répertoire en ligne de données de médias disponibles, pour leur téléchargement, sur des pages Internet et/ou pour l'émission de données de médias par un moteur de recherche Internet,
**caractérisée en ce que**
- les données de médias sont codées à l'aide d'un filigrane qui est un signe distinctif de la page Internet sur laquelle les données de médias sont disponibles avec l'accord du détenteur des droits des données de médias, et
- **en ce que**, dans le répertoire en ligne, il est seulement enregistré un renvoi aux données de médias et/ou, à la suite d'une demande de recherche d'un utilisateur Internet, il est seulement créé un renvoi aux données de médias, si le filigrane décodé à partir des données de médias est un signe distinctif de la page Internet sur laquelle sont disponibles les données de médias auxquelles il doit être renvoyé dans le répertoire en ligne et/ou auxquelles il est renvoyé lors de la demande de recherche.

2. Méthode selon la revendication 1, **caractérisée en ce que** le filigrane est l'adresse Internet, le nom de domaine, l'URL ou une identification similaire de la page Internet.

3. Méthode selon la revendication 1 ou 2, **caractérisée en ce que** les données de médias sont des photos.
